# EUROPEAN PATENT APPLICATION

(11) **EP 3 750 696 A1**
(43) Date of publication of application: **16.12.2020**
(21) Application number: 20177819.8
(22) Date of filing: 02.06.2020
(51) Int. Cl.: B29C 70/84, B29C 70/34, B29C 70/46, B29C 63/00

(54) **MOLDING METHOD AND MOLDED ARTICLE**

(30) Priority: 10.06.2019 JP 2019108088
(71) Applicant: Mazda Motor Corporation, Aki-gun Hiroshima 730-8670 (JP)
(72) Inventor: YAMAGUCHI, Kojiro, Hiroshima 730-8670 (JP); TAKAHASHI, Katsunori, Hiroshima 730-8670 (JP); MORIWAKI, Motonori, Hiroshima 730-8670 (JP); NAKAI, Masanori, Hiroshima 730-8670 (JP); ICHIHARA, Koichiro, Hiroshima 730-8670 (JP); TOMINAGA, Yasuhiro, Hiroshima 730-8670 (JP); UJIHIRA, Naoki, Hiroshima 730-8670 (JP)
(74) Representative: Laufhütte, Dieter

(57) **Abstract**

A molding method comprising: a first step of disposing a composite material (112) and a molded member (110) in an overlapped manner between a die (14) having a first mold part (16) and a punch (18) having a second mold part (20) opposing the first mold part (16); and a second step of pressing the punch (18) in a direction to approach the die (14) so as to mold the composite material (112) and the molded member (110) into shapes corresponding to the first and second mold parts (16, 20) and join the composite material (112) and the molded member (110) to each other, wherein the composite material (112) has a thickness of 0.01 mm or more and 1 mm or less.

## Description

### Technical Field

The present invention relates to a molding method and a molded article molded by the molding method.

### Background Art

US 2017/0291387 discloses a technique of joining a composite material containing fiber reinforced plastics and a thermosetting resin (referred to as "reinforcement member" in US 2017/0291387) and a metal molded member (referred to as "base member" in US 2017/0291387) by press molding. Specifically, the molding method of US 2017/0291387 includes a step of setting the molded member in a lower mold, a step of disposing the composite material between the molded member set in the lower mold and an upper mold, and a step of clamping the upper mold and the lower mold so as to mold the composite material into a shape corresponding to the molded member. The upper mold and the lower mold each include a heater. At the time of mold clamping, the thermosetting resin in the composite material is heated by the heaters, so that the composite material and the molded member are joined to each other. Such a molding method of US 2017/0291387 enables molding of a molded article having high mechanical strength, and thus can be suitably applied to, for example, manufacturing of structural components of vehicles.

Meanwhile, there is a need for increasing molding efficiency by minimizing the number of steps (processing time) required for processing. Consequently, it is desirable to perform a molding process of molding a composite material and a molded member into desired shapes and a joining process of joining the composite material and the molded member at the same time and in parallel. However, it is necessary to previously mold a metal molded member into a shape corresponding to a lower mold in US 2017/0291387 described above, and thus US 2017/0291387 cannot meet such a need.

### Summary of Invention

An object of the present invention is to provide a molding method capable of joining a molded member and a composite material and at the same time, molding the molded member and the composite material into a desired shape, and a molded article molded by the molding method.

In order to achieve the object described above, a molding method according to the present invention includes a first step of disposing a composite material and a molded member in an overlapped manner between a die having a first mold part and a punch having a second mold part opposing the first mold part, and a second step of pressing the punch in a direction to approach the die so as to mold the composite material and the molded member into shapes corresponding to the first and second mold parts and join the composite material and the molded member to each other, wherein the composite material has a thickness of 0.01 mm or more and 1 mm or less.

### Brief Description of Drawings

FIG. 1 is a schematic view of a press molding device used in a molding method according to an embodiment of the present invention, the schematic view illustrating a state where a punch is separated from a die;
FIG. 2 is an enlarged cross-sectional view illustrating a portion surrounded by a circle II in FIG. 1 in an enlarged manner;
FIG. 3 is a view illustrating a state where the press molding device illustrated in FIG. 1 performs mold clamping to mold and adhere a composite material and a molded member;
FIG. 4 is an enlarged cross-sectional view illustrating a portion surrounded by a circle IV in FIG. 3 in an enlarged manner; and
FIG. 5 is a schematic sectional view illustrating a structure of a composite material used in another embodiment.

### Description of Embodiments

Hereinafter, a molding method and a molded article obtained by the molding method according to an embodiment of the present invention will be described with reference to the accompanying drawings.

### (1) Molding Device

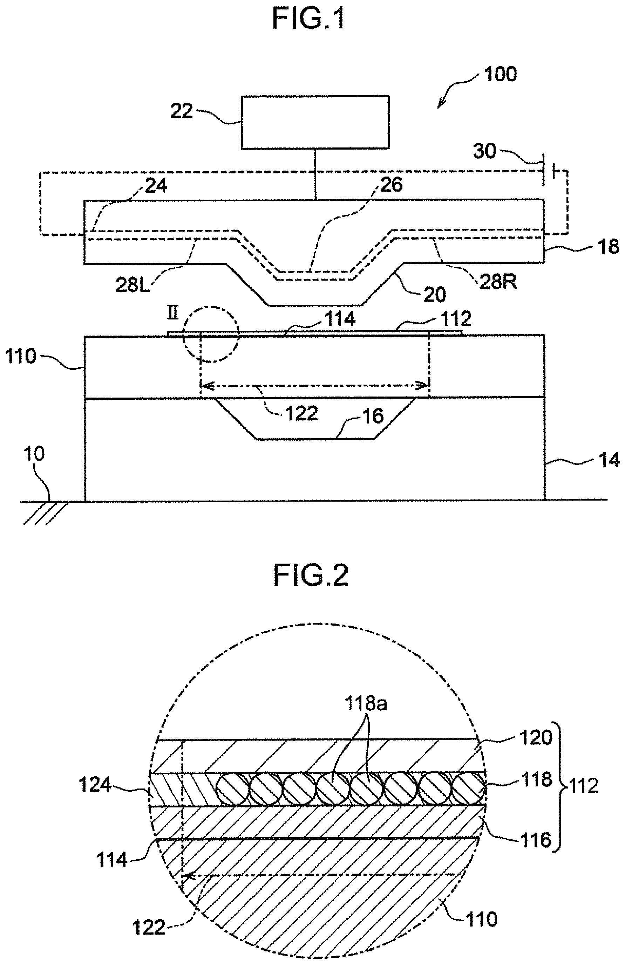

FIG. 1 is a view illustrating a schematic configuration of a press molding device 100 used in the molding method according to the embodiment of the present invention. The press molding device 100 is a device that joins a molded member 110 and a composite material 112 and at the same time, molds the molded member 110 and the composite material 112 into a desired shape.

As illustrated in FIG. 1, the press molding device 100 includes a die 14 and a punch 18. The die 14 is disposed on an upper surface of a base 10, and the punch 18 is disposed above the die 14.

The die 14 is a block-like rigid member extending in a direction perpendicular to a paper surface of FIG. 1. The die 14 has a first mold part 16 at a substantially central portion in a width direction of the die 14 (left-right direction in FIG. 1). The first mold part 16 is a recess for giving a desired shape to the molded member 110 and the composite material 112 disposed on an upper surface of the die 14, and is shaped to be open upward. The die 14 includes a jig (for example, vise) (not illustrated) for fixing an end of the molded member 110.

The punch 18 is a block-like rigid member extending in the direction perpendicular to the paper surface of FIG. 1. The punch 18 has a second mold part 20 at a substantially central portion in a width direction of the punch 18 (left-right direction in FIG. 1). The second mold part 20 is a projection for giving a desired shape to the molded member 110 and the composite material 112, and projects downward toward the first mold part 16 of the die 14.

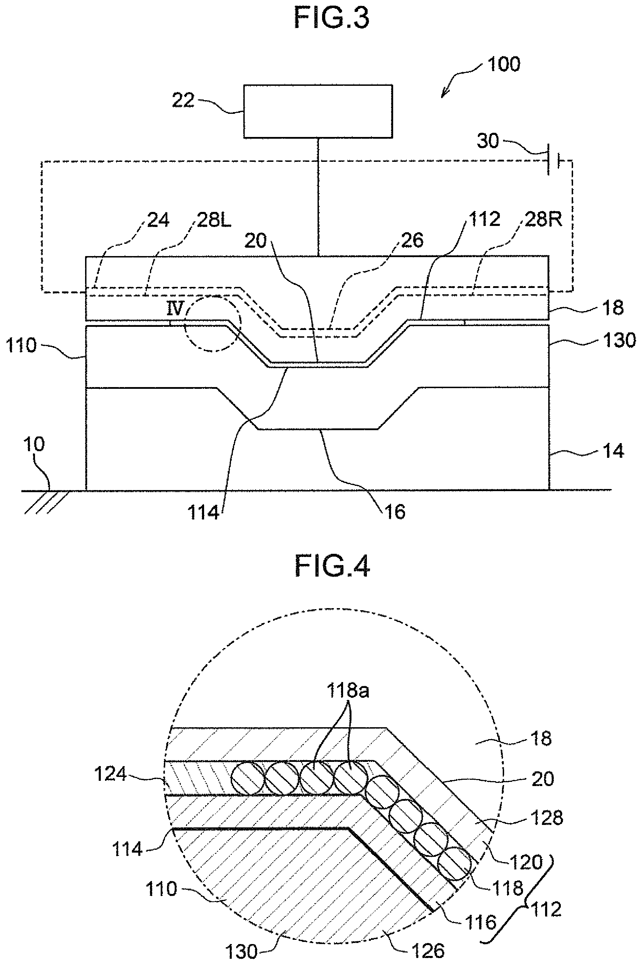

The punch 18 is held by a punch holder (not illustrated). The punch holder is connected to a pneumatic or hydraulic lifting device 22. That is, the punch 18 is movably supported between a raised position illustrated in FIG. 1 and a lowered position illustrated in FIG. 3 according to the drive of the lifting device 22.

In the present embodiment, the punch 18 includes a heat transfer part 24 therein. The heat transfer part 24 includes a central part 26 formed to project downward corresponding to the second mold part 20 and paired side parts 28L, 28R that are arranged on the left and the right of the central part 26 and extend horizontally along a reference surface of the punch 18 (lower surface of portion except for second mold part 20). The heat transfer part 24 is electrically connected to a power supply 30 and is configured to be heated by the power supplied from the power supply 30. The heat transfer part 24 can be heated to a temperature at which thermosetting adhesives 114 and 124 to be described later are cured.

### (2) Molding Method

Next, an example of a method of molding a molded article 130 (FIG. 3 and FIG. 4) using the press molding device 100 described above will be described. At the time of molding, first, as illustrated in FIG. 1, the molded member 110 is disposed on the upper surface of the die 14 and the composite material 112 is disposed on the upper surface of the molded member 110. At this time, the thermosetting adhesive 114 is disposed between the molded member 110 and the composite material 112. The adhesive 114 is applied to the entire lower surface of the composite material 112.

The molded member 110 is a plate-like member extending in the direction perpendicular to the paper surface of FIG. 1, and the composite material 112 is a laminated body of a thin plate extending in the direction perpendicular to the paper surface of FIG. 1. In the present embodiment, the molded member 110 is a metal plate, for example, a steel plate, and the composite material 112 is a laminated body of two metal plates and reinforcement fiber (to be described in detail later). The composite material 112 is formed so that its width (dimension in left-right direction in FIG. 1) is smaller than the width of the molded member 110, and is placed on the upper surface of the substantially central portion of the molded member 110. In addition, the thickness of the composite material 112 (dimension in vertical direction in FIG. 1) is much less than the thickness of the molded member 110.

FIG. 2 is a cross-sectional view illustrating the structure of the composite material 112. As illustrated in FIG. 2, the composite material 112 includes a first base member 116, a reinforcement member 118, and a second base member 120. The first base member 116, the reinforcement member 118, and the second base member 120 are vertically laminated so as to be arranged (overlap) in this order from a side closer to the upper surface of the molded member 110.

The first base member 116 is a metal plate extending in a direction perpendicular to paper surfaces of FIG. 1 and FIG. 2. The first base member 116 and the molded member 110 are preferably made of the same material so that electrolytic corrosion does not easily occur between the first base member 116 and the molded member 110.

The reinforcement member 118 has a plurality of strand tows 118a extending in the direction perpendicular to the paper surfaces of FIG. 1 and FIG. 2. The plurality of tows 118a are arranged side by side within an area 122 on the upper surface of the first base member 116, the area 122 being surrounded by a two-dot chain line. The area 122 where the reinforcement member 118 is disposed is an area corresponding to the first mold part 16 of the die 14. The thermosetting adhesive 124 is disposed between the first base member 116 and the second base member 120. The adhesive 124 is applied to the entire upper surface of the first base member 116 so as to cover the reinforcement member 118.

The second base member 120 is a metal plate extending in the direction perpendicular to the paper surfaces of FIG. 1 and FIG. 2. The width of the second base member 120 is substantially equal to the width of the first base member 116. The second base member 120 is disposed so that the entire lower surface of the second base member 120 opposes the upper surface of the first base member 116 with the reinforcement member 118 and the adhesive 124 interposed between the second base member 120 and the first base member 116.

The thickness of the composite material 112, that is, the total thickness of the first base member 116, the reinforcement member 118, and the second base member 120 is set to 0.01 mm or more and 1 mm or less, preferably 0.1 mm or more and 1 mm or less. The thickness (or diameter) of each of the members 116, 118, and 120 is appropriately adjusted so that the thickness of the composite material 112 falls within the numerical range mentioned above (0.01 to 1 mm). As a preferred example, the thickness of the composite material 112 may be about 0.8 mm.

In addition, as a preferred example, the material of each of the members 116, 118, and 120 of the composite material 112 may be steel, carbon fiber, and an aluminum alloy, respectively. When this material example is applied to the composite material 112 having a thickness of about 0.8 mm, the first base member 116 may be a steel plate having a thickness of about 0.3 mm. Each of the plurality of tows 118a constituting the reinforcement member 118 may be an aggregate of long fiber bundles (filaments) obtained by bundling a large number of carbon single fibers, and the diameter of each tow 118a may be about 0.2 mm. The second base member 120 may be a plate made of an aluminum alloy having a thickness of about 0.3 mm.

FIG. 3 is a view illustrating a step performed after the step illustrated in FIG. 1 (step of disposing molded member 110 and composite material 112 between die 14 and punch 18), and illustrates a state where the press molding device 100 performs mold clamping. As illustrated in FIG. 3, at the time of mold clamping, the punch 18 is lowered toward the die 14 according to the drive of the lifting device 22. The punch 18 is thus pressed against the die 14 with the molded member 110 and the composite material 112 interposed between the punch 18 and the die 14. As a result, the molded member 110 and the composite material 112 are molded into shapes corresponding to the respective opposing surfaces of the die 14 and the punch 18. That is, the molded member 110 and the composite material 112 after mold clamping (after molding) have projections 126, 128, which project downward and respectively correspond to the shapes of the mold part 16 of the die 14 and the mold part 20 of the punch 18 (see FIG. 4). At this time, the thickness of the composite material 112 is 1 mm or less, and thus the composite material 112 can be deformed into the shape similar to the molded member 110 without any trouble.

Further, at the time of mold clamping, the punch 18 contacts the composite material 112, so that the heat transfer part 24 in the punch 18 applies heat to the thermosetting adhesive 124 in the composite material 112 (between first base member 116 and second base member 120). As a result, the adhesive 124 is cured, and the first base member 116 and the second base member 120 are joined by curing.

Moreover, at the time of mold clamping described above, the heat transfer part 24 applies heat to the thermosetting adhesive 114 between the molded member 110 and the composite material 112 via the composite material 112. As a result, the adhesive 114 is cured, and the molded member 110 and the composite material 112 are joined by curing.

The molded member 110 and the composite material 112 are joined to each other while being press-molded by the method described above. As a result, the molded article 130 is obtained.

Here, the composite material 112 includes the reinforcement member 118 made of, for example, carbon fiber, and thus has high mechanical strength. Further, since the composite material 112 includes the reinforcement member 118 and the thermosetting adhesive 124, the composite material 112 has a high damping capacity based on the elasticity of the reinforcement member 118 and the adhesive 124. Consequently, the molded article 130 obtained by joining such a composite material 112 to the molded member 110 has high mechanical strength and high damping capacity. Here, the mechanical strength is a concept including both proof stress and rigidity (Young's modulus).

### (3) Other Preferred Examples of Materials and Dimensions

The embodiment described above exemplifies the case where the molded member 110 and the first base member 116 of the composite material 112 are each made of steel. However, the molded member 110 and the first base member 116 may be made of a metal material other than steel, for example, an aluminum alloy. Further, the molded member 110 and the first base member 116 may be made of a resin. In either case, it is preferable that the molded member 110 and the first base member 116 are made of the same material so that electrolytic corrosion does not easily occur.

Moreover, while the embodiment described above exemplifies the case where the reinforcement member 118 of the composite material 112 is made of carbon fiber, the reinforcement member 118 may be made of a fiber material other than carbon fiber, for example, glass fiber.

Further, the embodiment described above exemplifies the case where the thickness of each of the first base member 116 and the second base member 120 is about 0.3 mm and the diameter of the tow of the reinforcement member 118 is about 0.2 mm. However, the thickness (diameter) described above may take various values as long as the overall thickness of the composite material 112 falls within a specified range (0.01 mm to 1 mm). For example, the thickness of each of the first base member 116 and the second base member 120 may be about 0.08 mm, and the diameter of the tow of the reinforcement member 118 may be about 0.05 mm. In this case, the overall thickness of the composite material 112 is about 0.2 mm. If the thickness of the composite material 112 is small, the composite material 112 easily fits the molded member 110 even if the molded member 110 has a complicated shape (for example, shape including fine recesses and projections), so that good joining strength between the composite material 112 and the molded member 110 is achieved.

### (4) Modification of Molding Method

In the embodiment described above, while the punch 18 includes the heat transfer part 24 that can be heated by energization in order to heat and cure the thermosetting adhesives 114, 124, a similar heat transfer part may be provided in the die 14.

The embodiment described above exemplifies the case where the adhesive 114 between the molded member 110 and the composite material 112 and the adhesive 124 between the first base member 116 and the second base member 120 in the composite material 112 are each a thermosetting adhesive. However, both the adhesives 114, 124 may be an adhesive other than the thermosetting adhesive, for example, a pressure-sensitive adhesive (adhesive agent). In this case, it is not necessary to heat the adhesive, and thus it is not necessary to dispose the heat transfer part 24 and the power supply 30 in the punch 18 or the die 14.

While the molded member 110 and the composite material 112 are joined by the adhesive 114 in the embodiment described above, the molded member and the composite material may be joined by, for example, press-fitting using a pressure applied from the punch 18.

In the embodiment described above, the composite material 112 is placed on the upper surface of the molded member 110, and the punch 18 is pressed down from above the composite material 112, so that the molded member 110 and the composite material 112 are press-molded. Alternatively, the composite material may be disposed on the lower surface of the punch at the time of press molding. In this case, it is preferable to use a jig (holder) that holds an end of the composite material on the lower surface of the punch so that the composite material does not fall.

While the molded member 110 and the composite material 112 are disposed so as to be arranged (overlap) in this order from a side of the die 14 (lower side) in the embodiment described above, the arrangement order of the molded member and the composite material may be reversed. That is, the molded member and the composite material may be disposed so as to be arranged in this order from a side of the punch (upper side).

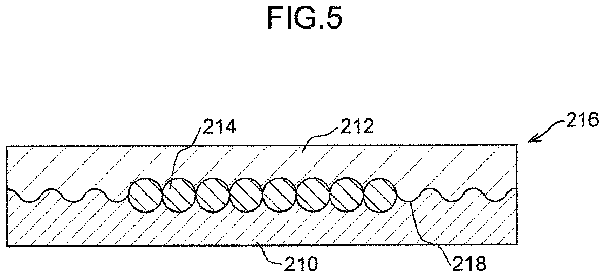

In the embodiment described above, the first base member 116 and the second base member 120 of the composite material 112 are joined to each other via the adhesive 124. However, the means for joining the first base member 116 and the second base member 120 is not limited thereto. FIG. 5 is a view illustrating an example of a composite material obtained by a joining method without using an adhesive. A composite material 216 illustrated in FIG. 5 includes a first base member 210 and a second base member 212 that are joined by explosive welding, and a reinforcement member 214 that is interposed and fixed between the base members 210 and 212. The composite material 216 molded by explosive welding has a characteristic wavy pattern 218 at a joining interface between the first base member 210 and the second base member 212. Such a composite material 216 can be joined to another component to increase the mechanical strength of the component, similarly to the composite material 112 of the embodiment described above.

### (5) Summary

The embodiment described above is summarized as follows.

The molding method according to the embodiment described above includes a first step of disposing a composite material and a molded member in an overlapped manner between a die having a first mold part and a punch having a second mold part opposing the first mold part, and a second step of pressing the punch in a direction to approach the die so as to mold the composite material and the molded member into shapes corresponding to the first and second mold parts and join the composite material and the molded member to each other. The composite material has a thickness of 0.01 mm or more and 1 mm or less.

According to this molding method, a molding process of molding the composite material and the molded member into desired shapes and a joining process of joining the composite material and the molded member to each other are performed at the same time and in parallel by an operation of pressing the punch against the die (press molding). It is thus possible to effectively improve the molding efficiency of a molded article. In addition, since the thickness of the composite material is as small as 1 mm or less, the composite material can be easily molded into a shape similar to the molded member, and the degree of freedom in the shape of the molded article can be successfully achieved.

The composite material preferably includes a first base member, a second base member joined to the first base member, and a reinforcement member that is interposed and fixed between the first base member and the second base member.

This configuration can improve the mechanical strength or damping capacity of the molded member.

The reinforcement member may include carbon fiber or glass fiber.

According to this configuration, carbon fiber or glass fiber can sufficiently improve the mechanical strength of the molded article.

The composite material preferably has a thickness of 0.01 mm or more and 0.2 mm or less.

According to this configuration, since the composite material is easily deformed at the time of molding, the degree of freedom in the shape of the molded article can be further improved.

In the first step, an adhesive is preferably disposed between the composite material and the molded member.

This configuration can sufficiently achieve the joining strength between the composite material and the molded member.

The adhesive may be a thermosetting adhesive. In this case, in the second step, the punch is preferably made to approach the die while heat is applied from the die or the punch to the thermosetting adhesive.

According to this configuration, the thermosetting adhesive can be cured by the heat from the die or the punch, and the composite material and the molded member can be appropriately joined by the adhesive cured.

This application is based on Japanese Patent application No. 2019-108088 filed in Japan Patent Office on June 10, 2019, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A molding method comprising:
a first step of disposing a composite material (112) and a molded member (110) in an overlapped manner between a die (14) having a first mold part (16) and a punch (18) having a second mold part (20) opposing the first mold part (16); and
a second step of pressing the punch (18) in a direction to approach the die (14) so as to mold the composite material (112) and the molded member (110) into shapes corresponding to the first and second mold parts (16, 20) and join the composite material (112) and the molded member (110) to each other,
wherein the composite material (112) has a thickness of 0.01 mm or more and 1 mm or less.

2. The molding method according to claim 1, wherein the composite material (112) includes a first base member (116), a second base member (120) joined to the first base member (116), and a reinforcement member (118) that is interposed and fixed between the first base member (116) and the second base member (120).

3. The molding method according to claim 2, wherein the reinforcement member (118) includes carbon fiber or glass fiber.

4. The molding method according to any one of claims 1 to 3, wherein the composite material (112) has a thickness of 0.01 mm or more and 0.2 mm or less.

5. The molding method according to any one of claims 1 to 4, wherein in the first step, an adhesive (114) is disposed between the composite material (112) and the molded member (110).

6. The molding method according to claim 5, wherein
the adhesive (114) is a thermosetting adhesive, and
in the second step, the punch (18) is made to approach the die (14) while heat is applied from the die (14) or the punch (18) to the thermosetting adhesive (114).

7. A molded article comprising the composite material (112) and the molded member (110) that are joined to each other by the molding method according to any one of claims 1 to 6.
